# EUROPÄISCHE PATENTANMELDUNG

(11) **EP 0 521 416 A1**
(43) Veröffentlichungstag der Anmeldung: **07.01.1993**
(21) Anmeldenummer: 92110880.9
(22) Anmeldetag: 26.06.1992
(51) Int. Cl.: B65G 17/12

(54) **Vorrichtung zum Aufnehmen und Abführen von Auffangkästen für Teile aus der Serienproduktion**

(30) Priorität: 02.07.1991 DE 4121844
(71) Anmelder: Zierpka, Günter, D-76199 Karlsruhe (DE)
(72) Erfinder: Zierpka, Günter, D-76199 Karlsruhe (DE)
(74) Vertreter: Geitz, Heinrich, Dr.-Ing.

(57) **Zusammenfassung**

Zwischen zwei voneinander beabstandeten Endlosfördermitteln (20,20') sind in Umlaufrichtung aufeinanderfolgend in untereinander gleichen Abständen Konsolen (24) für die Aufnahme von Auffangkästen (30,30') für losweise zu sammelnde Teile aus der Serienproduktion angeordnet und mit den Trumlagen der Endlosfördermittel (20,20') verbunden. Die Konsolen (24) haben horizontale Aufstandsflächen (25) und sind im gesamten Umlaufbereich der Fördermittel parallel zu sich selbst geführt. Bei einer zweckmäßigen Ausgestaltung ist die Parallelführung der Konsolen (24) zu sich selbst dadurch verwirklicht, daß diese auf beiden Seiten in höhenversetzt angeordneten Punkten an die Trumlagen der beabstandeten Endlosfördermittel (20,20') angeschlossen sind.

## Beschreibung

Die Erfindung bezieht sich auf eine Vorrichtung zum Aufnehmen und Abführen von Auffangkästen für Teile aus der Serienproduktion in vorbestimmten Losgrößen, insbesondere von Kleinteilen, die von mehrfach fallenden Werkzeugen ausgeworfen werden.

Bei der Produktion insbesondere von Kleinteilen besteht häufig die Forderung nach bestimmten Losgrößen. Derartige Kleinteile, bei denen es sich um Spritzgießteile, Stanzteile oder dergleichen handeln kann, werden nach dem Auswurf aus einer Produktionsmaschine bzw. einem in der Maschine aufgenommenen Werkzeug in Auffangkästen gesammelt. Diese Auffangkästen müssen nach dem Erreichen einer vorbestimmten, von Fall zu Fall durchaus unterschiedlichen Teilezahl, der sogenannten Losgröße, gegen Leerkästen ausgetauscht werden.

Notwendig muß während des Austauschs eines mit Teilen einer Losgröße gefüllten Auffangkastens gegen einen leeren Auffangkasten die Produktion unterbrochen werden. Die insoweit auftretenden Stillstandszeiten der Produktionsmaschinen können im Verhältnis zu den Produktionszeiten insbesondere beim Einsatz mehrfach fallender Werkzeuge sehr beachtlich sein.

Bei mehrfach fallenden Werkzeugen werden je Arbeitstakt beispielsweise acht oder zehn untereinander gleiche Teile hergestellt. Wenn beispielsweise ein zehnfach fallendes Stanzwerkzeug auf einem schnellläufigen Stanzautomaten mit einer Hubfrequenz von ... Arbeitstakten eingesetzt wird, erfordert die Herstellung einer Losgröße von beispielsweise 500 Teilen eine Produktionszeit von ... Die durch das Austauschen eines gefüllten Auffangbehälters gegen einen Leerbehälter erzwungene Stillstandszeit kann bei derartig kleinen Losgrößen durchaus in die Größenordnung der Produktionszeit gehen.

Die Aufgabe der vorliegenden Erfindung besteht daher in der Schaffung einer Vorrichtung zum Aufnehmen und Abführen von Auffangkästen für Teile aus der Serienproduktion in vorbestimmten Losgrößen, die ein einfaches und schnelles Auswechseln eines mit Teilen einer vorgegebenen Losgröße gefüllten Auffangkastens gegenüber einem leeren Auffangkasten ermöglicht.

Gelöst ist diese Aufgabe bei einer Vorrichtung der vorgenannten Art und Zweckbestimmung dadurch, daß zwischen zwei voneinander beabstandeten Endlosfördermitteln in Umlaufrichtung aufeinanderfolgend Konsolen mit horizontal verlaufenden Aufstandsflächen für die Aufnahme der Auffangkästen für die losweise zu sammelnden Teile angeordnet und im gesamten Umlaufbereich der Fördermittel parallel zu sich selbst geführt sind.

Bei der Erfindung handelt es sich somit um eine Vorrichtung mit plattformartigen Konsolen, die für die austauschbare Aufnahme von Auffangkästen für Kleinteile bestimmt und in solcher Weise zwischen den beabstandeten Endlosfördermittel aufgenommen und an deren Trumlagen befestigt sind, daß beim Umlauf der Endlosfördermittel die Konsolen und damit die Aufstandsflächen für die Auffangkästen horizontal bleiben. Mittels einer derartigen Vorrichtung können mithin auf den Konsolen aufstehende Auffangkästen in eine Füllstation bzw. eine geeignete Auffangposition für die von einem Werkzeug ausgeworfenen Teile gebracht und nach dem Erreichen der vorgegebenen Losgröße durch einfaches Betätigen der Endlosfördermittel um einen vorbestimmten Fortschaltschritt aus der Auffangposition abgeführt werden, während ein auf einer in Umlaufrichtung der Endlosfördermittel folgenden Konsole aufgenommener Auffangkasten gleichzeitig in die Füllstation bzw. Auffangposition gelangt. Es ist ersichtlich, daß durch das gleichzeitige Zuführen eines leeren Auffangkastens in die Füllstation bzw. Auffangposition die zwischen zwei Losgrößen unvermeidbaren Stillstandszeiten merklich reduziert werden können.

Eine besonders einfache Führung der Konsolen parallel zu sich selbst ist bei einer sinnvollen Weiterbildung der erfindungsgemäßen Vorrichtung dadurch verwirklicht, daß die Konsolen auf beiden Seiten in höhenversetzt angeordneten Punkten an die Trumlagen der beabstandeten Endlosfördermittel befestigt sind. Die höhenversetzte Befestigung der voneinander entfernten Seiten der Konsolen an den beabstandeten Endlosfördermitteln kann beispielsweise in der Form verwirklicht sein, daß mit dem Endlosfördermittel auf der einen Seite ein abwärtsgerichteter Mitnehmer, hingegen mit dem Endlosfördermittel auf der anderen Seite ein nach oben gerichteter Mitnehmer verbunden ist und daß an den von den jeweiligen Trumlagen entfernten Enden der Mitnehmer die Konsolen befestigt sind.

Eine andere wichtige Weiterbildung sieht hingegen vor, daß die Umlenkrollen zum Führen des Endlosfördermittels auf der einen Seite um das Höhenmaß zwischen den beiderseitigen Anlenkpunkten der Konsolen gegenüber den Umlenkrollen zum Führen des anderen Endlosfördermittels höhenversetzt angeordnet sind und daß jede Konsole mit ihrem oberen Anlenkpunkt an dem über die höherliegenden Umlenkrollen geführten Endlosfördermittel, hingegen mit ihrem unteren Anlenkpunkt an dem über die tieferliegenden Umlenkrollen geführten Endlosfördermittel angelenkt sind. Bei einer derartigen Anordnung der Umlenkrollen der Endlosfördermittel ist sichergestellt, daß in jeder Betriebsstellung im gesamten Umlaufbereich der Endlosfördermittel der Anlenkpunkt einer jeden Konsole auf der einen Seite sich immer um das vorgegebene Abstandsmaß über dem Anlenkpunkt auf der anderen Seite befindet. Es bedarf keiner über die jeweilige Trumlage nach oben bzw. nach unten vorstehender Mitnehmer, sondern den Anschluß der Konsolen an die Endlosfördermittel können sich seitwärts von der jeweiligen Trumlage vorstehende Mitnehmer vermitteln.

Eine gleichfalls weitere Ausgestaltung der erfindungsgemäßen Vorrichtung ist durch eine im wesentlichen horizontal verlaufende Förderstrecke mit einer Füllstation im Bereich der die Endlosfördermittel umlenkenden und führenden Umlenkrollen gekennzeichnet.

Eine so ausgebildete Vorrichtung kann beispielsweise in der Form betrieben werden, daß Konsolen mit leeren Auffangbehältern im Bereich der unteren Trumlagen zugeführt und bei der Umlenkung der Endlosfördermittel im Bereich ihrer Umlenkrollen in eine Füllstation bzw. eine Auffangposition gebracht werden und dort verharren, bis eine der vorgegebenen Losgröße entsprechende Anzahl Teile aufgenommen ist. Die Abförderung geschieht dann im Bereich der oberen Trumlagen dadurch, daß die Endlosfördermittel um einen dem Abstandsmaß zwischen zwei aufeinanderfolgenden Konsolen entsprechenden Schritt fortschalten und dadurch die nächstfolgende Konsole mit einem leeren Auffangbehälter in die Auffangposition bzw. in die Füllstation bringen.

Die erfindungsgemäße Vorrichtung kann selbstverständlich alternativ zu der vorstehend erläuterten Ausführungsform auch eine im wesentlichen vertikal verlaufende Förderstrecke haben, in welchem Falle sich im Bereich der einen Trumlage in einer vorbestimmten Höhenposition eine Füllstation zum Abwerfen produzierter Teile in einen auf einer in dieser Position stehenden Konsole aufgenommenen Auffangkasten befindet und die Abförderung von Konsolen mit gefüllten Auffangkästen beispielsweise wieder nach oben bei gleichzeitiger Nachförderung einer Konsole mit einem leeren Auffangbehälter von unten erfolgt. Es handelt sich bei einer derartigen Ausgestaltung mithin um eine Anordnung ähnlich einem Paternosteraufzug.

Eine nochmalige Weiterbildung sieht die Kombination der zuletzt behandelten Ausgestaltungen in der Form vor, daß die die Konsolen zwischen sich aufnehmenden Endlosfördermittel je eine horizontal verlaufende Förderstrecke mit einer Füllstation und eine vertikal verlaufende Förderstrecke mit einer Entladestation im Bereich der von der horizontalen Förderstrecke abgewandten Trumlagen haben. Bei einer derartigen Ausgestaltung befindet sich zweckmäßigerweise die Füllstation im Umlenkbereich am Ende der horizontalen Förderstrecke, während die Entladestation auf der von der horizontalen Förderstrecke abgewandten Seite vorgesehen ist und mithin ein einfaches und unbehindertes Entnehmen der mit Teilen vorgegebener Losgrößen gefüllten Auffangbehälter ermöglicht.

Zweckmäßigerweise kann es sich bei den Endlosfördermitteln um Rollenketten handeln und die Vorrichtung kann durch die Ausbildung als fahrbares Gerät gekennzeichnet sein, das in einfacher Weise von einer Produktionsmaschine zu einer anderen verfahrbar ist.

Eine nochmalige wichtige Weiterbildung der Erfindung sieht vor, daß beim Aufnehmen von Teilen aus mehrfach fallenden Werkzeugen entsprechend mehrfach unterteilte Auffangkästen bzw. Auffangkästen in entsprechender Anzahl auf den Konsolen aufgenommen und jeweils die aus einer Werkzeugpaarung kommenden Teile in einen Auffangkasten bzw. ein Fach eines Auffangkastens abgeworfen werden.

Der zuletzt erörterten Maßnahme kommt beispielsweise bei Stanzteilen wesentliche Bedeutung zu, weil sich gezeigt hat, daß unbeschadet der Herstellung der Matrizen und Stempel eines mehrfach fallenden Werkzeugs aus dem gleichen Material die Standzeiten der einzelnen Matrizen- / Stempelpaarungen durchaus unterschiedlich sein und mithin die von den einzelnen Stempel- / Matrizenpaarungen gefertigten Teile auch entsprechende Maßabweichungen haben können. Dies bedeutet, daß beim Stumpfwerden einer Stempel- / Matrizenpaarung die aus dieser Paarung kommenden Teile unter Umständen unbrauchbar sind. Wenn nun die vom gesamten Werkzeug gefertigten Teile in einem Auffangkasten aufgefangen werden, muß gegebenenfalls die Gesamtproduktion als Ausschuß verworfen werden, weil eine nachträgliche Separierung der von den einzelnen Stempel- / Matrizenpaarungen kommenden Teile von den übrigen Teilen schlechterdings unmöglich ist.

Hier schafft die oben behandelte Ausgestaltung der Erfindung insofern Abhilfe, als die von den einzelnen Stempel-/ Matrizenpaarungen kommenden Teile getrennt voneinander in verschiedenen Auffangkästen oder verschiedenen Fächern eines Auffangkastens gesammelt werden. Wenn beispielsweise die aus einer Matrizen- / Stempelpaarung kommenden Teile Ausschuß sind, können diese Teile bei Verwendbarkeit aller anderen Teile getrennt ausgesondert werden.

Anhand der beigefügten Zeichnung soll nachstehend eine Ausführungsform der erfindungsgemäßen Vorrichtung erläutert werden. In schematischen Ansichten zeigen:
- Fig. 1: eine seitliche Ansicht einer erfindungsgemäßen Vorrichtung mit zwischen zwei beabstandet voneinander angeordneten und über Umlenkrollen geführten Rollenketten aufgenommenen Konsolen als Mittel zum austauschbaren Aufnehmen von Auffangkästen für aus der Massenproduktion kommende Kleinteile,
- Fig. 2: die Vorrichtung in einer rückwärtigen Ansicht gemäß Pfeil II in Fig. 1 und
- Fig. 3: in einer - vergrößerten - Ausschnittansicht gemäß III in Fig. 2 die höhenversetzte Befestigung einer Konsole an den Trumlagen der beabstandeten Rollenketten.

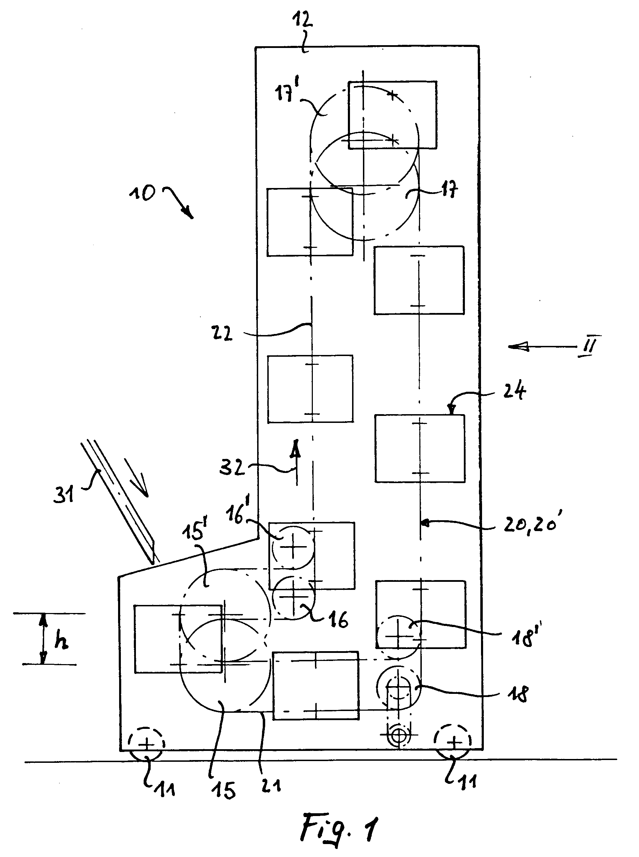

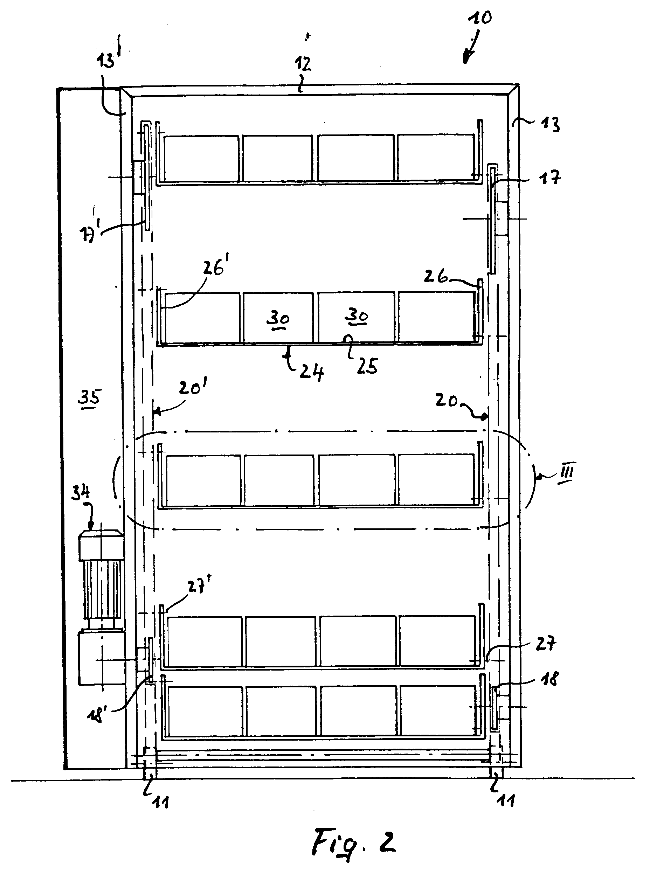

Die in den Fig. 1 und 2 in ihrer Gesamtheit veranschaulichte Vorrichtung 10 besitzt einen auf Laufrädern 11 verfahrbar aufgenommenen Rahmen 12 mit zwei voneinander beabstandeten seitlichen Rahmenteilen 13, 13'. Innenseitig sind an den seitlichen Rahmenteilen je vier Umlenkrollen 15 bis 18 bzw. 15' bis 18' drehbar gelagert und auf diesen Umlenkrollen ist jeweils eine Rollenkette 20, 20' als Endlosfördermittel geführt. Die Umlaufwege der Rollenketten setzen sich dabei aus jeweils einer kurzen horizontal gerichteten unteren Förderstrecke 21 und einer sich im Abstand von den vorderen Umlenkrollen 15, 15' der horizontalen Förderstrecke verlaufenden vertikalen Förderstrecke 22 zusammen. Jeweils am freien Ende der horizontal gerichteten Förderstrecke 21 werden über die dort angeordneten Umlenkrollen 15, 15' die Rollenketten 20, 20' um 180° umgelenkt, hingegen in den Übergangsbereichen zu der vertikal verlaufenden Förderstrecke 22 mittels der dort angeordneten Umlenkrollen 16, 18 bzw. 16', 18' lediglich um 90°. Am oberen Ende der vertikalen Förderstrecke 22 erfolgt dann wieder mittels der Umlenkrollen 17, 17' eine Umlenkung der Rollenketten 20, 20' um 90°.

Die an den beiden voneinander entfernten seitlichen Rahmenteilen 13, 13' einander paarweise zugeordneten Umlenkrollen 15 bis 18 bzw. 15' bis 18' der beiden Rollenketten 20, 20' sind jeweils um ein vorbestimmtes Höhenmaß h gegeneinander versetzt angeordnet. Dadurch laufen im Bereich der horizontalen Förderstrecke 21 die den beiden beabstandeten Rollenketten 20, 20' zugeordneten Trumlagen in verschiedenen Ebenen, deren vertikaler Abstand gleich dem vertikalen Abstandsmaß h zwischen jeweils einander entsprechenden Umlenkrollen der beiden Umschlingungstriebe ist. Da auch die Umlenkrollen 17, 17' am oberen Ende der vertikal verlaufenden Förderstrecke 22 in gleicher Weise höhenversetzt zueinander angeordnet sind, befindet sich der obere Kulminationspunkt des Umlenkbereichs der einen Rollenkette in einer gegenüber dem entsprechenden Kulminationspunkt der anderen Rollenkette erhöhten Lage. Insbesondere Fig. 2 zeigt, daß die in dieser Darstellung die auf der linken Seite angeordnete Rollenkette 20' führenden Umlenkrollen 15' bis 18' gegenüber den Umlenkrollen 15 bis 18 auf der rechten Seite höhenversetzt sind.

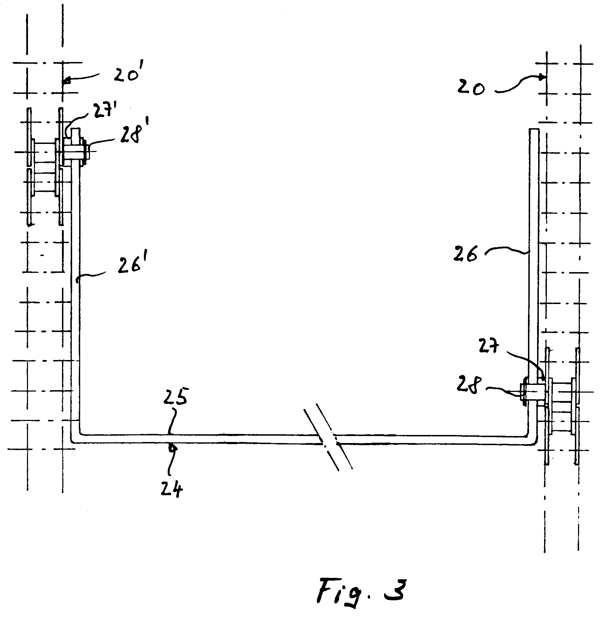

Wiederum insbesondere aus Fig. 2 ist ersichtlich, daß zwischen den über die genannten Umlenkrollen geführten Rollenketten 20, 20' Konsolen 24 mit ebenen Aufstandsflächen 25 und seitlichen Wangen 26, 26' aufgenommen und mit den Trumlagen der beiden beabstandeten Rollenketten 20, 20' verbunden sind. Die Anschlußpunkte der Seitenwangen 26, 26' der Konsolen 24 an die jeweiligen Trumlagen der beabstandeten Rollenketten 20, 20' sind dabei um das gleiche Höhenmaß h zueinander versetzt, wie die einander entsprechenden Umlenkrollen der beiden Rollenketten. Fig. 3 zeigt in gegenüber Fig. 2 vergrößerter Darstellung, daß die linken Seitenwangen 26' der Konsolen 24 im Bereich ihrer Oberkanten bei 27' an die linksseitige Rollenkette 20' angeschlossen sind, hingegen die Seitenwangen 26 der Konsolen auf der rechten Seite bei 27 an die rechtsseitigen Rollenkette 20 im Bereich ihrer unteren Kanten. Als Befestigungsmittel dienen sich von den jeweiligen Kettengliedern nach innen forterstreckende Zapfen 28, 28'.

Dieser höhenversetzte Anschluß der Seitenwangen 26, 26' einer jeden Konsole 24 an die beabstandeten Rollenketten 20, 20' stellt sicher, daß die Konsolen mit ihren Aufstandsflächen 25 über den gesamten Umlaufbereich der Rollenketten parallel zu sich selbst geführt werden. Dies ist auch aus Fig. 1 ersichtlich, in der eine Konsole 24 am freien Ende der horizontalen Förderstrecke im Bereich zwischen den Umlenkrollen 15, 15' dargestellt ist, in der die Trumlagen der beabstandeten Rollenketten genau in einem Höhenabstand voneinander verlaufen, der gleich dem Höhenversatz h zwischen den links- und rechtsseitigen Anlenkpunkten 27, 27' der Konsolen an die Rollenketten 20, 20' ist.

Wie in den Fig. 1 und 2 angedeutet, sind die Konsolen 24 aufeinanderfolgend zwischen den Rollenketten 20, 20' in untereinander gleichen Abständen angeordnet, die für die Aufnahme von Auffangkästen 30 für von einer Produktionsmaschine kommende Kleinteile bestimmt sind. In Fig. 1 steht eine mit vier Auffangkästen bestückte Konsole 24 in der Auffangposition zwischen den Umlenkrollen 15, 15' am freien Ende der horizontalen Förderstrecke 21. Über eine nur angedeutete Rutsche 31 werden die von einer nicht weiter gezeigten Produktionsmaschine kommenden Kleinteile in einen auf der Konsole aufstehenden Auffangkasten abgeworfen. Sobald eine bestimmte Anzahl Teile, die sogenannte Losgröße, in den Auffangkasten abgeworfen ist, werden die Rollenketten 20, 20' mit den daran befestigten Konsolen 24 um ein Teilungsmaß zwischen zwei aufeinanderfolgenden Konsolen fortgeschaltet. Dabei wird eine Konsole mit gefüllten Auffangbehältern aus der Füllposition abgefördert und gleichzeitig die nächstfolgende Konsole mit leeren Auffangbehältern in die Füllposition gebracht. Der Umlauf der Rollenketten mit den Konsolen erfolgt beispielsweise in Richtung des Pfeils 32 in Fig. 1. Angetrieben werden die Rollenketten 20, 20' mittels eines in Fig. 2 nur angedeuteten Getriebemotors 34, der auf einer sich seitlich von dem Rahmenteil 13' forterstreckenden Platte 35 aufgenommen ist.

Angesichts der paternosterartigen Ausbildung der Vorrichtung im Bereich der vertikalen Förderstrecke 22 ist eine beträchtliche Pufferung innerhalb der Vorrichtung gewährleistet. Mit unterschiedlichen Losgrößen gefüllte Auffangbehälter sind auf der von der horizontalen Förderstrecke 21 mit der Füllstation abgewandten Seite der vertikalen Förderstrecke entnehmbar und gegen leere Auffangbehälter austauschbar. Die erfindungsgemäße Vorrichtung 10 ermöglicht somit ein äußerst schnelles Abführen eines Auffangbehälters mit einer bestimmten Losgröße gefertigter Teile und den Ersatz gefüllter Auffangbehälter durch Leerbehälter, indem die Vorrichtung lediglich um einen dem Teilungsmaß zwischen aufeinanderfolgenden Konsolen 24 entsprechenden Schritt taktweise weiterschaltet.

Wie insbesondere Fig. 2 zeigt, sind auf den Konsolen 24 mehrere Auffangbehälter 30 in Nebeneinanderanordnung aufgenommen. Es könnten aber auch Auffangbehälter mit mehreren voneinander getrennten Kammern eingesetzt werden. Eine derartige Anordnung ermöglicht es bei mehrfach fallenden Werkzeugen die jeweils aus einer Werkzeugpaarung kommenden Teile in einem Auffangkasten bzw. in einer Kammer getrennt von den Teilen aus anderen Paarungen eines Werkzeugs zu sammeln. Im dargestellten Falle handelt es sich darum, daß Teile von einem - nicht gezeigten - vierfach fallenden Werkzeug getrennt nach der Herkunft aus jeweils einer Werkzeugpaarung den einzelnen Kästen zugeführt werden. Dadurch wird erreicht, daß bei an einer Werkzeugpaarung auftretenden Ausschuß eine Vermischung dieser Ausschußteile mit den aus den anderen Werkzeugpaarungen kommenden Gutteilen verhindert wird und somit nur die tatsächlich unbrauchbaren Teile als Ausschuß abgeführt werden können.

## Patentansprüche

1. Vorrichtung zum Aufnehmen und Abführen von Auffangkästen für Teile aus der Serienproduktion in vorbestimmten Losgrößen, insbesondere von Kleinteilen, die von mehrfach fallenden Werkzeugen ausgeworfen werden,
dadurch gekennzeichnet,
daß zwischen zwei voneinander beabstandeten Endlosfördermitteln (20, 20') in Umlaufrichtung aufeinanderfolgend Konsolen (24) mit horizontalen Aufstandsflächen (25) für die Aufnahme der Auffangkästen (30, 30') für die losweise zu sammelnden Teile angeordnet und im gesamten Umlaufbereich der Fördermittel parallel zu sich selbst geführt sind.

2. Vorrichtung nach Anspruch 1, dadurch gekennzeichnet, daß die Konsolen (24) auf beiden Seiten in höhenversetzt angeordneten Punkten (27, 27') an die Trumlagen der beabstandeten Endlosfördermittel (20, 20') angeschlossen und dadurch parallel zu sich selbst geführt sind.

3. Vorrichtung nach Anspruch 2, dadurch gekennzeichnet, daß die Umlenkrollen (15 bis 18) zum Führen des Endlosfördermittels (20) auf der einen Seite um das Höhenmaß (h) zwischen den beidseitigen Anlenkpunkten (27, 27') der Konsolen (24) gegenüber den Umlenkrollen (15' bis 18') zum Führen des anderen Endlosfördermittels (20') höhenversetzt angeordnet sind und daß die Konsolen mit ihren oberen Anlenkpunkten (27') an dem über die höherliegenden Umlenkrollen geführten Endlosfördermittel (20'), hingegen mit ihren unteren Anlenkpunkten (27) an dem über die tieferliegenden Umlenkrollen geführten Endlosfördermittel (20) angeschlossen sind.

4. Vorrichtung nach Anspruch 2 oder 3, gekennzeichnet durch eine im wesentlichen horizontal verlaufende Förderstrecke (21) mit einer Füllstation im Bereich der die Endlosfördermittel führenden Umlenkrollen (15, 15').

5. Vorrichtung nach einem der Ansprüche 2 bis 4, gekennzeichnet durch eine im wesentlichen vertikal verlaufende Förderstrecke (22).

6. Vorrichtung nach einem der Ansprüche 2 bis 5, dadurch gekennzeichnet, daß die die Konsolen (24) zwischen sich aufnehmenden Endlosfördermittel (20, 20') je eine horizontal verlaufende Förderstrecke (21) mit der Füllstation und eine vertikal verlaufende Förderstrecke (22) mit einer Entladestation im Bereich der von der horizontalen Förderstrecke abgewandten Trumlagen haben.

7. Vorrichtung nach einem der Ansprüche 1 bis 6, dadurch gekennzeichnet, daß es sich bei den Endlosfördermitteln um Rollenketten (20, 20') handelt.

8. Vorrichtung nach einem dar Ansprüche 1 bis 7, gekennzeichnet durch die Ausbildung als fahrbares Gerät mit Laufrollen (11).

9. Vorrichtung nach einem der Ansprüche 1 bis 8, dadurch gekennzeichnet, daß beim Aufnehmen von Teilen aus mehrfach fallenden Werkzeugen entsprechend mehrfach unterteilte Auffangkästen (30') bzw. Auffangkästen in entsprechender Anzahl auf den Konsolen (24) aufgenommen und jeweils die aus einer Werkzeugpaarung kommenden Teile in einen Auffangkasten bzw. ein Kastenfach abgeworfen werden.
